# EUROPEAN PATENT SPECIFICATION

(11) **EP 2 874 324 B1**
(45) Date of publication and mention of the grant of the patent: **01.03.2017**
(21) Application number: 13306571.4
(22) Date of filing: 18.11.2013
(51) Int. Cl.: H04B 3/44

(54) **Power supply for a submarine branching unit**
Stromversorgung für eine Unterwasser-Verzweigungseinheit
Alimentation électrique pour une unité de dérivation sous-marine

(43) Date of publication of application: 20.05.2015
(73) Proprietor: ALCATEL LUCENT, 92100 Boulogne-Billancourt (FR)
(72) Inventor: Verhaege, Thierry, 91620 Nozay (FR); Boulon, Rodolphe, 91620 Nozay (FR); Cordier, Alain, 91620 Nozay (FR)
(74) Representative: Shamsaei Far, Hassan

(56) References cited:
- EP-A2- 0 917 300
- GB-A- 2 287 625

## Description

### The present invention relates to submarine communications systems

### BACKGROUND

Submarine communications systems typically use equipment installed underwater, such as branching units and repeaters, which need electric power supply to feed their electronics. Alternating Current (AC) is typically not the preferred choice for supplying power to such units because AC typically has a limited reach and may not be appropriate for use in long distance power transmission as is the case in submarine communications.

### SUMMARY

Some embodiments of the disclosure feature a branching unit for a submarine communications system according to claim 1:

EP 0 917 300 A2 discloses a branching unit for an underwater communications system with a switching circuit comprising a delay circuit coupled between two terminations for constraining the power routing configuration of the branching unit in the presence of a shunt fault. The delay circuit may be responsive to a rate of increase of an applied current, whereby the delay circuit is only operative when the rate of increase of applied current is below a predetermined level.

GB 2 287 625 A discloses a branching unit for an underwater communications system arranged to provide remote hot switching for electrical power. The unit has three terminations each for a different one of three line cables and one or more power demand circuits requiring an electrical power feed from the line cables. A switching circuit is actuable to complete a current path between an appropriate pair of the three terminations via one or more of the power demand circuits in dependence upon relative line voltage. Further switching means is actuable after actuation of the switching circuit in dependence upon current supplied to the power demand circuit(s) rising above that which occurs upon action of the switching circuits. The further switching means completes a circuit between the non parent terminations and a fourth termination for a sea earth.

According to some specific embodiments the branching unit is configured to receive direct current -DC- power from a first power source or a second power source, or both.

According to some specific embodiments the branching comprises an LC filter configured to filter the third voltage at input ports of the internal circuit. According to some specific embodiments, in the first state a circuit is closed between the second power source, first primary winding and the first transistor. According to some specific embodiments, in the second state a circuit is closed between the second power source, second primary winding and the second transistor.

According to some specific embodiments the first power source and the second power source each comprise one or more zener diodes.

According to some specific embodiments a breakdown voltage of the zener diode in the second power supply unit is higher than a sum of the breakdown voltage of the zener diode in the first power supply unit and a forward voltage of the rectifier bridge.

According to some specific embodiments the branching unit comprises a measurement unit configured for measuring a current in a branch cable connected to the branching unit, said measurement being used for assessing the presence of sufficient current in the branch cable to trigger the operation of the control unit.

These and further features and advantages of the present invention are described in more detail, for the purpose of illustration and not limitation, in the following description as well as in the claims with the aid of the accompanying drawings.

### BRIEF DESCRIPTION OF THE DRAWINGS

Figure 1 is an exemplary schematic representation of a branching unit for a submarine communications system according to known solutions.
Figures 2A and 2B are exemplary schematic representations of two variants of a branching unit for a submarine communications system according to some embodiments of the disclosure.
Figure 3 is an exemplary schematic representation of a branching unit for a submarine communications system comprising a switched mode power supply arrangement according to some embodiments of the disclosure.

### DETAILED DESCRIPTION

Branching units are well-known and are widely used in submarine communications systems. Branching units need electric power to feed their internal electronic components. As mentioned above, supply of DC Power to a branching unit is preferable over AC power. Such DC power may be available from the cables connecting to the branching unit (BU), either the main cable (typically called the trunk), the branch cable, or both. The DC electric power for submarine cable systems typically uses relatively high voltages, typically in the range of 15 kV. Therefore in a typical case there may be up to 15 kV DC voltage difference between two cables entering the BU.

In order to enable flexibility in providing different system powering configurations to the BU, in particular what cable fault is present, known submarine BUs are provided with redundant power supply in addition to a main or primary power supply (being the power supply normally in operation for the supply of power). Of course the primary and the redundant power supply may be used interchangeably.

Therefore, in case there is a failure in supply of power from the primary power supply, the redundant power supply may be switched into the circuit to thereby restore power in the BU.

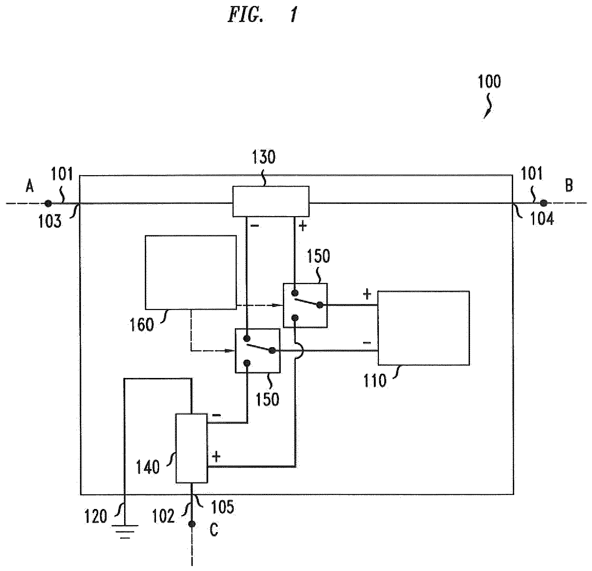

Figure 1 schematically illustrates an example of a known branching unit (BU) 100 for a submarine communications system. The BU 100 has at least three ports 103, 104 and 105. Ports 103 and 104 connect the BU 100 to a main cable (trunk) 101 and port 105 connects the BU to the branch cable 102. It is assumed that the trunk 101 is a submarine cable connecting two end-stations A and B, which may be land stations or underwater stations and the branch cable 102 is another submarine cable which connects the BU to a third end-station C which likewise may be a land station or underwater station. With this configuration the BU 100 may be configured to direct (branch) a portion of the communication traffic typically in the form of optical signals having specific wavelengths from the trunk 101 and convey such portion of the traffic to the third end-station C through the branch cable 102. Conversely, the BU 100 may be configured to direct (add) a portion of the communication traffic also in the form of optical signals having specific wavelengths from the branch cable 102 to the trunk 100 which in turn conveys the optical signal to an end-station, A or B.

The BU 100 further comprises internal electronic components and circuitry (herein referred to as internal electronics) 110 which typically require electric power for their operation. Such electric power supply is provided to the BU by means of a first power supply unit 130 or a second power supply unit 140. The first and the second power supply units, 130 and 140, may be interchangeably used as main (primary) and redundant power supply units.

The BU 100 further comprises a set of relay switches 150 and a switching control circuit 160. The switching control circuit 160 is configured to send switching signals to the set of relay switches 150 to cause the relay switches to switch from one position, in which the relay switches provide electric connectivity between the internal electronics 110 and e.g. the first power supply 130, to another position, in which the relay switches provide electric connectivity between the internal electronics 110 and the second power supply 140.

With this arrangement, in case of a failure in the supply of power from the main power supply unit which is feeding the BU 100, say the first power supply unit 130, the switching control circuit 160 is activated, either automatically or remotely through an activation command, thereby sending a switching signal to the relay switches 150. Upon receiving such switching signal, the relay switches 150 switch from one position to another thereby disconnecting the faulty power supply unit 130 from the internal electronics and connecting the other power supply unit 140 to thereby supply power to the internal electronics. The power supplies 130 and 140 may have outputs in the range of a few tens of Watts, and may be made of power zener diodes for regulating the DC voltage.

This arrangement however suffers from certain drawbacks. One drawback associated to this known solution is that due to the remote location of the BU with respect to the end-stations A, B and C, where the former is typically on seabed and the latter are typically on land, the switching mechanism has to be remotely controlled or automatically switched. Such switching options however involve complexity in the switching mechanism. For example the two poles of the equipment would typically need to be first disconnected from one power supply and then connected to the other one. This can cause a loss of power in the system during the disconnection and connection actions which may disturb the operation of the BU. Also, due to the presence of high voltage, there may be severe risks of short-circuiting the two power supplies during the switching actions which may also cause significant damage. In addition, the abrupt voltage change could create capacitive discharges, potentially disturbing the BU operation.

Furthermore, as high voltages are involved in the switching (in the range of 10-15 kV or more) the use of high voltage relays becomes necessary. However the use of high voltage relays typically suffers from limitations in the maximum insulation capability of the dielectric material, in their capability of hot switching (hot switching may occur when an electrical contact is being made between two circuits that were initially at different voltages; such contact may make a current surge that may generate heat in the contact and elsewhere on the circuit), in the number of switching actions they can perform during the life of the system and in the risks of voltage breakdown which may result in short-circuiting the high voltage to ground.

Furthermore, in the known systems there may often be a need to provide energy storage means in order to avoid interruption of the power supply during the fly time of the relay contacts.

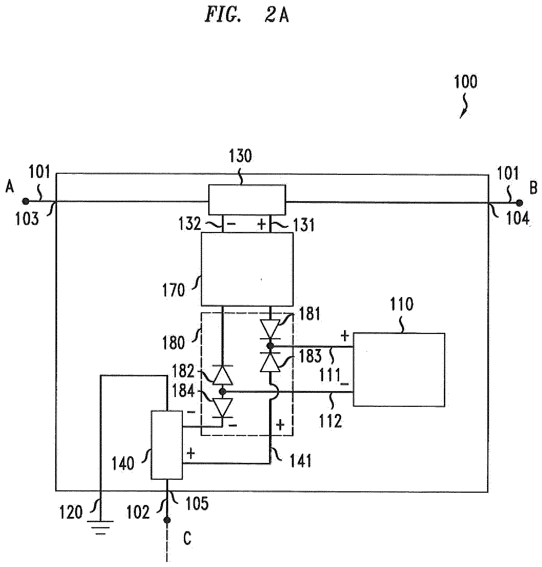

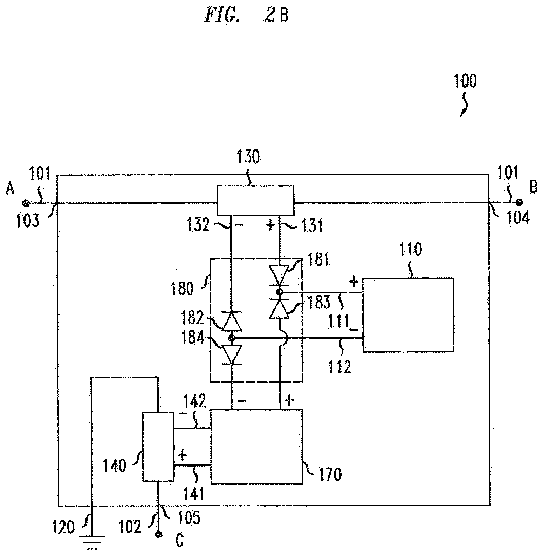

Figures 2A and 2B illustrate two exemplary variants of a branching unit for a submarine communications system according to some embodiments of the disclosure. In figures 2A and 2B, like elements have been given like reference numerals as those of figure 1.

With simultaneous reference to figures 2A and 2B a branching unit (BU) 100 for a submarine communications system includes at least three ports 103, 104 and 105. Ports 103 and 104 connect the BU 100 to a main cable (trunk) 101 and port 105 connects the BU to the branch cable 102. It is assumed that the trunk 101 is a submarine cable connecting two end-stations A and B, which may be land stations or underwater stations and the branch cable 102 is another submarine cable which connects the BU to a third end-station C which likewise may be a land station or underwater station. The BU 100 may therefore be configured to direct (branch) a portion of the communication traffic from the trunk 100 and convey such portion of the traffic to the third end-station C through the branch cable 102. Such portion of communication traffic may contain optical signals in the form of specific wavelengths. Conversely, the BU 100 may be configured to direct (add) a portion of the communication traffic also in the form of optical signals having specific wavelengths from the branch cable 102 to the trunk 100 which in turn conveys the optical signal to an end-station, A or B.

The BU 100 further comprises internal electronic components and circuitry (internal electronics) 110 which require electric power for their operation. Such electric power supply is provided to the BU by means of a first power supply unit 130 or a second power supply unit 140, or in some embodiments by both power supply units. The first and the second power supply units, 130 and 140, may be interchangeably used as main (primary) and secondary power supply units respectively. Herein the term main or primary as referred to a power supply unit is to be understood to refer to a power supply unit which is in charge of supplying power to the internal electronics of the BU under normal operation conditions. Likewise the term secondary as referred to a power supply unit is to be understood to refer to a power supply unit which is in charge of supplyinhg power in case the primary power supply unit is unable to supply any or sufficient power to the internal electronics of the BU. In the example shown in figures 2a and 2B, the first power supply unit 130 is shown to be on the trunk 101 and the second power supply unit 140 is shown to be on the branch cable 102 with a connection to ground 120 and both power supply units are shown to be inside the body of the branching unit 100. However, this is only provided for facilitating illustration and those of ordinary skill in the related art will understand that the two power supplies may be at any suitable location on the network of the submarine communications system. For example the first power supply 130 may be located at or close to end-stations A or end-station B and the second power supply 140 may be located at or close to end-station C.

However, differently from the known BU arrangement of figure 1, the BU 100 according to the embodiments of the present disclosure uses a high voltage isolated DC to DC switched mode power supply configuration using a self-switching circuit 170 (herein also referred to as switcher). In the context of the present disclosure the term high voltage is to be understood to refer to a voltage in range of 100V to 50 kV, typical values being between 1 kV and 15kV.

The BU 100 further comprises a set of diodes disposed in a rectifier bridge interconnection 180 (herein also referred to as bridge) as will be described further below.

The embodiment of figures 2A and 2B are similar in many aspects, except for the difference that while in figure 2A, the switcher 170 is connected between the first power supply unit 130 and the bridge 180, in figure 2B the switcher 170 is connected between the second power supply unit 130 and the bridge 180.

Referring now to figure 2A, two main scenarios of operation may be considered.

In a first scenario it may be assumed that both power supply units 130 and 140 can operate normally and no fault is present in the system. In such a case, only one power supply unit, e.g. the first power supply unit 130, needs to be put in operation. The other power supply unit may or may not be supplying power depending on design options as will be described further below. In this scenario, an electric circuit is closed between the first power supply unit 130, electric path 131, switcher 170, diode 181, electric path 111, internal electronics 110, electric path 112, diode 182, switcher 170, electric path 132 and back to the first power supply unit 130. Therefore, internal electronics 110 receive power from the first power supply unit 130.

In a second scenario, it may be assumed that the first power supply unit 130, ceases to operate due to a fault in the trunk cable or a depowering action undertaken by the system operator.. In this situation the drop in the voltage from the first power supply unit automatically enables the use of the second power supply unit 130 as the source of power. As a result an electric circuit formed between the second power supply unit 140, electric path 141, diode 183, electric path 111, internal electronics 110, electric path 112, diode 184 and back to the second power supply unit 140, ensures the supply of power to the internal electronics 110.

The scenarios to be considered with respect to the embodiment of figure 2B are very similar to those of figure 2A. Briefly, it may be said that in a first scenario, an electric circuit is closed between the first power supply unit 130, diode 181, internal circuits 110, electric path 112, diode 182 and back to the first power supply unit 130. In the second scenario, the drop in the voltage from the first power supply 130 causes the second power supply 140 to automatically provide the necessary power to the internal electronics 110 through the electric circuit provided between the second power supply unit 140, electric path 141, the switcher 170, diode 183, electric path 111, internal circuits 110, electric path 112, diode 184, switcher 170, electric path 142 and back to the second power supply unit 140.

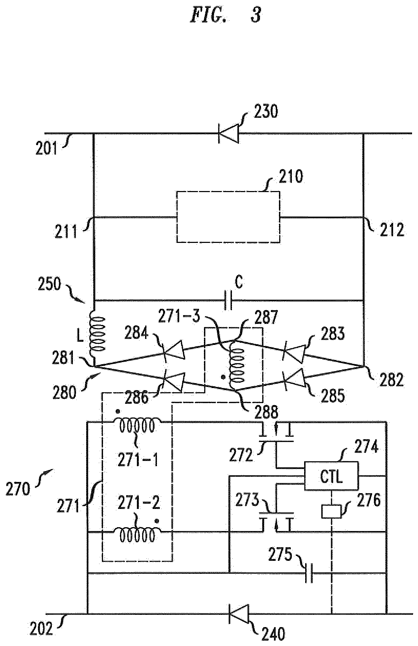

Referring now to figure 3, the operation of the self-switching circuit (switcher) as part of a switched mode power supply configuration (SMPS) will be described in further detail. Figure 3 illustrates a branching unit (BU) 200 for a submarine communications system. The BU 200 of figure 3 has similar features as those described with respect to figures 2A and 2B and therefore a detailed description on the trunk and branch connections thereof is not considered necessary. In figure 3, the trunk cable is shown by reference numeral 201 and the branch cable is shown by reference numeral 202. The BU 200 further comprises internal electronics 210 which require electric power for their operation. Such electric power supply may be provided to the BU by means of a first power supply unit 230 or a second power supply unit 240. The first and the second power supply units, 230 and 240, may be interchangeably used as main (primary) and secondary power supply units and may be located at any convenient location on the submarine network, as discussed above in relation to figures 2A and 2B. The first and second power supplies 230, 240 may be constructed based on the use of zener diodes for providing DC voltage to the BU.

The BU 200 further comprises a rectifier bridge 280 (same as bridge 180 in figures 2A and 2b). Preferably an LC filter 250, comprising capacitance C and inductance L may be provided to ensure that a smooth DC voltage is provided at the output of the bridge.

The switcher 270 comprises an insulation transformer arrangement 271 having a magnetic core (not shown) and a set of windings 271-1, 271-2 and 271-3. First and second windings 271-1 and 271-2 may operate as primary windings and third winding 271-3 as secondary winding. First and second windings 271-1 and 271-2 are provided with opposite polarity as can be seen by dots in the figure. The insulation transformer may ensure that the internal electronics are isolated from the power source. The windings may preferably be made of high voltage insulated wires.

The switcher 270 further includes two transistors 272 and 273. Preferably the transistors are Field Effect Transistors (FET), however the disclosure is not so limited and other types of transistors may also be used in accordance with design requirements. The two transistors 272 and 273 are arranged in parallel configuration and with their respective gates connected to a control unit 274. Preferably a snubber 275 is placed in the circuit in parallel configuration with respect to the zener diode 240 and the windings 271-1 and 271-2 to dampen sharp rises in the voltage across winding-FET branches as a result of sudden interruptions of current flow in these branches. The snubber 275 may for example be an RC or any other suitable circuit.

With this arrangement, two main scenarios may be considered.

In a first scenario it may be assumed that both power supply units 230 and 240 can operate normally and no fault is present in the system. In such a case, only one power supply unit, e.g. first power supply unit 230, needs to be put in operation. The other power supply unit may or may not be supplying power depending on design options as will be described further below. As can be readily seen in figure 3, the first power supply unit 230 can directly feed the internal electronics as long as it is operating normally. Intermediate components may exist in the circuit path that connects the power supply unit 230 to internal electronics 210, or any other circuit element as required by the specific use. Such intermediate components are not shown in figure 3 for simplicity of illustration and the embodiment of this figure is not to be construed as excluding such components. In this scenario, various options may be available as outlined below:
- Option A: if the breakdown voltage of the zener diode in the second power supply unit 240 is sufficiently high, this power supply unit may also provide an auxiliary current in addition to the current provided by the first power supply unit 230. In this case the auxiliary current provided would not be necessary for the operation of the system. Such current will pass through the first power supply unit 230 without disturbing the operation of the BU. The breakdown voltage of the zener diode in the second power supply unit 240 is considered to be sufficiently high when it is higher than the sum of the breakdown voltage of the zener diode in the first power supply unit 230 and the forward voltage of the bridge 280 (i.e. voltage drop across diodes 284 and 285; or voltage drop across diodes 283 and 286),
- Option B: if the breakdown voltage of the zener diode in the second power supply unit 240 is not sufficient and there is enough current in the trunk 201, this second power supply unit would not provide a secondary current.

The above options may be provided by design according to the specific needs or preferences of application.

In a second scenario, it is assumed that the first power supply unit 230, ceases to operate, or is not capable to supply sufficient power due to a fault in the trunk cable or a depowering action undertaken by the system operator. In this situation the drop in the voltage from the first power supply unit causes the switcher 270 to automatically use power supplied by the second power supply unit 230. This is done in the following manner.

The control unit 274 is configured to trigger one or the other of the transistors continuously. Therefore at a specific instant the control unit triggers, e.g. first transistor 272, to switch it on. When the first transistor 272 is turned on, a circuit is closed between the second power supply unit 240, first primary winding 271-1 and the first transistor 272. Due to the supply of power, current builds up in the primary winding 271-1. Such current build-up is induced from the first primary winding 271-1 of the transformer 271 to the secondary winding 271-3. As a result, a voltage (and a current) is built up at the two ends 287 and 288 of the secondary winding 271-3 which is delivered, through the rectifier bridge 280, at output ports 281-282. Output ports 281- 282 are in turn connected to the input ports 211 and 212 of the internal electronics 210 of the branching unit 200. This process constitutes a first cycle for the supply of power which is delivered by the secondary winding 271-3 and is provided to the internal electronics 210.

In the next cycle, the control unit 274 turns the first transistor 272 off. This causes the voltage in the first primary winding 271-1, and as a consequence the voltage in the secondary winding 271-3, to reverse. Simultaneously, the control unit 274 turns the second transistor 273 on. However, the combined action on the two transistors may result in the current to have one single path through the transformer.

Similarly when the second transistor 272 is turned on, a circuit is closed between the second power supply unit 240, second primary winding 271-2 and the second transistor 273. Due to the supply of power, current builds up in the second primary winding 271-2. Such current build-up is induced from the second primary winding 271-2 of the transformer 271 to the secondary winding 271-3. As a result, a voltage (and a current) is built up at the two ends 287 and 288 of the secondary winding 271-3 which is delivered, through the rectifier bridge 280, at output ports 281-282. This voltage (and current) is opposite to that of produced in the previous cycle described above. Output ports 281- 282 are in turn connected to the input ports 211 and 212 of the internal electronics 201 of the branching unit 200. This process constitutes a second cycle for the supply of power which is delivered by the secondary winding 271-3 and is provided to the internal electronics 210.

Next a new cycle may be initiated by turning off the second transistor 273 and turning on the first transistor 272 and the first cycle and the second cycle as described above may be repeated.

It is to be noted that in the second scenario, a situation similar to option A above is provided wherein the breakdown voltage of the zener diode in the second power supply unit 240 is sufficiently high and thus is capable of providing power, which in this case is necessary for the operation of the internal electronics 210 due to the absence of sufficient power supplied by the first power supply unit 230 unit.

The control unit is operational as long as it is supplied with sufficient current from the branch cable 202.

As can be seen in figure 3, first and second primary windings 271-1 and 271-2 have opposite polarities. Therefore, in the first cycle as described above the voltage induced at ports 287 and 288 of the secondary winding 271-3 has a first polarity, while in the second cycle such polarity reverses thereby providing an alternating voltage at ports 287 and 288. The use of the rectifier bridge 280 however serves for rectifying said alternating voltage such that in one cycle current flows through one path, e.g. diode 283; secondary winding 271-3; diode 286 thereby providing a voltage polarity at output ports 281 and 282 and in the other cycle current flows diode 285; secondary winding 271-3; diode 284, thereby providing the same polarity as in the previous cycle at ports 281 and 282. The resulting output voltage therefore has a rectified shape which nears a DC shape output voltage.

As mentioned above, an LC filter 250 may be used to smoothen the shape of the output voltage at ports 281-282.

In this manner during both cycles a DC voltage is made available to the internal electronics 210 of the branching unit 200.

In case the fault affecting the operation of the first power supply unit is removed or repaired, the first power supply unit may automatically return to supplying power as discussed in relation to the first scenario.

In the example of figure 3, the first power supply unit 230 has been illustrated as the main or primary source of power supply and the second power supply unit 240 as the secondary source of power supply. As the voltage applied to the SPMS in the branch is limited by one or more zener diodes of the second power supply unit 240, the voltage limit of such zener diodes(z) may be selected to be lower than that of the zener diode(s) of the first power supply unit 230, so that the SMPS will transfer power only when necessary, e.g. when trunk is unpowered. Similar provisions however may apply in case the second power supply unit 240 is the main or primary source of power supply and the first power supply unit is the secondary one.

Optionally the SMPS may also comprise a measuring unit 276 for measuring the current in the branch cable. Such measurement is helpful as it may allow the control unit 274 to switch power only when the measured branch current is sufficient for triggering the switching of the transistors.

The solution provided by the present disclosure offers a simple scheme to ensure continuity in the supply of power without a need for high voltage relays. Furthermore, the present solution removes the need for having an energy storage element, e.g. battery, in the system as it ensures by itself uninterrupted supply of power in case of a fault or absence of current in the trunk. Finally, the need for using relays is also obviated and therefore the drawbacks associated with such use, such as mechanical wear, limited number of switching actions, limited maximum level of the high voltage, and the like are avoided.

It is to be noted that the list of structures corresponding to the claimed means is not exhaustive and that one skilled in the art understands that equivalent structures can be substituted for the recited structure without departing from the scope of the invention.

It should be appreciated by those skilled in the art that any block diagrams herein represent conceptual views of illustrative circuitry embodying the principles of the invention.

## Claims

1. A branching unit (100) for a submarine communications system configured to receive direct current -DC- power from a first power source (130, 230) or a second power source (140, 240), or both, wherein the first power source and the second power source each comprise one or more zener diodes, the branching unit comprises:
- an internal circuit (110) including electronic components;
- an insulation transformer (271) including a first primary winding (271-1), a second primary winding (271-2) and a secondary winding (271-3);
- a first transistor (272) electrically coupled to the first primary winding and a second transistor (273) electrically coupled to the second primary winding;
- a control unit (274); and
- a rectifier bridge (280);
wherein in a first state, the control unit (274) is configured to switch the first transistor (272) on, causing the first primary winding (271-1) to induce a first voltage in the secondary winding (271-3); and in a second state the control unit (274) is configured to switch the second transistor (273) on causing the second primary winding (271-2) to induce a second voltage in the secondary winding (271-3) such that the first and the second voltage have opposing polarities; and wherein the rectifier bridge (280) is configured to rectify the first and the second voltage and provide a rectified third voltage at input ports of the internal circuit (110).

2. The branching unit of any one of the preceding claims, comprising an LC filter configured to filter the third voltage at input ports of the internal circuit (110).

3. The branching unit of any one of the preceding claims, wherein in the first state a circuit is closed between the second power source (140, 240), first primary winding (271-1) and the first transistor (272).

4. The branching unit of any one of the preceding claims, wherein in the second state a circuit is closed between the second power source (140, 240), second primary winding (271-2) and the second transistor (273).

5. The branching unit of any one of the preceding claims, wherein a breakdown voltage of the zener diode in the second power supply unit (140, 240) is higher than a sum of the breakdown voltage of the zener diode in the first power supply unit (130, 230) and a forward voltage of the rectifier bridge (280),

6. The branching unit of any one of the preceding claims, wherein the branching unit (100) comprises a measurement unit (276) configured for measuring a current in a branch cable connected to the branching unit, said measurement being usable for assessing the presence of sufficient current in the branch cable to trigger the operation of the control unit (274).

## Patentansprüche

1. Abzweigeinheit (100) für ein Unterseekommunikationssystem, konfiguriert für den Empfang von Gleichstrom (Direct Current, DC) von einer ersten Stromquelle (130, 230) oder einer zweiten Stromquelle (140, 240) bzw. von beiden, wobei die erste Stromquelle und die zweite Stromquelle jeweils eine oder mehrere Zenerdioden umfassen, wobei die Abzweigeinheit umfasst:
- einen internen Schaltkreis (110) mit elektronischen Komponenten;
- einen Isolationswandler (271), welcher eine erste Primärwicklung (271-1), eine zweite Primärwicklung (271-2) und eine Sekundärwicklung (271-3);
- einen ersten Transistor (272), der elektrisch an die erste Primärwicklung gekoppelt ist, und einen zweiten Transistor (273), der elektrisch an die zweite Primärwicklung gekoppelt ist;
- eine Speichereinheit (274); und
- eine Gleichrichterbrücke (280);
wobei in einem ersten Zustand die Steuereinheit (274) dafür konfiguriert ist, um den ersten Transistor (272) einzuschalten, die erste Primärwicklung (271-1) dazu veranlassend, eine erste Spannung in der Sekundärwicklung (271-3) zu induzieren; und wobei in einem zweiten Zustand die Steuereinheit (274) dafür konfiguriert ist, um den zweiten Transistor (273) einzuschalten, die zweite Primärwicklung (271-2) dazu veranlassend, eine zweite Spannung in der Sekundärwicklung (271-3) zu induzieren, dergestalt, dass die erste und die zweite Spannung gegensätzliche Polaritäten haben; und
wobei die Gleichrichterbrücke (280) konfiguriert ist, die erste und die zweite Spannung gleichzurichten und eine gleichgerichtete dritte Spannung an Eingängen des internen Schaltkreises (110) zur Verfügung zu stellen.

2. Die Abzweigeinheit nach einem jeglichen der vorgenannten Ansprüche, einen LC-Filter umfassend, der konfiguriert ist für das Filtern der dritten Spannung an Eingängen des internen Schaltkreises (110).

3. Die Abzweigeinheit nach einem jeglichen der vorgenannten Ansprüche, wobei in dem ersten Zustand ein Schaltkreis zwischen der zweiten Stromquelle (140, 240), der ersten Primärwicklung (271-1) und dem ersten Transistor (272) geschlossen wird.

4. Die Abzweigeinheit nach einem jeglichen der vorgenannten Ansprüche, wobei in dem zweiten Zustand ein Schaltkreis zwischen der zweiten Stromquelle (140, 240), der zweiten Primärwicklung (271-2) und dem zweiten Transistor (273) geschlossen wird.

5. Die Abzweigeinheit nach einem jeglichen der vorgenannten Ansprüche, wobei eine Durchbruchspannung der Zenerdiode in der zweiten Stromquelleneinheit (140, 240) höher als die Summe der Durchbruchspannung der Zenerdiode in der ersten Stromquelleneinheit (130, 230) und einer Durchlassspannung der Gleichrichterbrücke (280) ist.

6. Die Abzweigeinheit nach einem jeglichen der vorgenannten Ansprüche, wobei die Abzweigeinheit (100) eine Messeinheit (276) umfasst, die konfiguriert ist für das Messen einer Spannung in einem mit der Abzweigeinheit verbundenen Abzweigkabel, wobei besagte Messung verwendbar ist für das Evaluieren des Vorhandenseins einer ausreichenden Spannung in dem Abzweigkabel, um den Betrieb der Steuereinheit (274) auszulösen.

## Revendications

1. Unité de branchement (100) d'un réseau de communications sous-marin configurée pour recevoir une alimentation en courant continu - CC - d'une première source d'alimentation (130, 230) ou d'une deuxième source d'alimentation (140, 240), ou des deux, dans laquelle la première source d'alimentation et la deuxième source d'alimentation comprennent chacune une ou plusieurs diodes zener, l'unité de branchement comprenant :
- un circuit interne (110) incluant des composants électroniques ;
- un transformateur d'isolement (271) incluant un premier enroulement primaire (271-1), un deuxième enroulement primaire (271-2) et un enroulement secondaire (271-3) ;
- un premier transistor (272) couplé électriquement au premier enroulement primaire et un deuxième transistor (273) couplé électriquement au deuxième enroulement primaire ;
- une unité de commande (274) ; et
- un pont redresseur (280) ;
dans laquelle dans un premier état, l'unité de commande (274) est configurée pour activer le premier transistor (272), provoquant l'induction par le premier enroulement primaire (271-1) d'une première tension dans l'enroulement secondaire (271-3) ; et dans un deuxième état l'unité de commande (274) est configurée pour activer le deuxième transistor (273), provoquant l'induction par le deuxième enroulement primaire (271-2) d'une deuxième tension dans l'enroulement secondaire (271-3) de sorte que la première et la deuxième tensions aient des polarités opposées ; et dans laquelle le pont redresseur (280) est configuré pour redresser la première et la deuxième tensions et fournir une troisième tension redressée sur les ports d'entrée du circuit interne (110).

2. Unité de branchement selon l'une quelconque des revendications précédentes, comprenant un filtre LC configuré pour filtrer la troisième tension au niveau des ports d'entrée du circuit interne (110).

3. Unité de branchement selon l'une quelconque des revendications précédentes, dans laquelle dans le premier état un circuit est fermé entre la deuxième source d'alimentation (140, 240), le premier enroulement primaire (271-1) et le premier transistor (272).

4. Unité de branchement selon l'une quelconque des revendications précédentes, dans laquelle dans le deuxième état un circuit est fermé entre la deuxième source d'alimentation (140, 240), le deuxième enroulement primaire (271-2) et le deuxième transistor (273).

5. Unité de branchement selon l'une quelconque des revendications précédentes, dans laquelle la tension de claquage de la diode zener de la deuxième source d'alimentation (140, 240) est supérieure à la somme de la tension de claquage de la diode zener de la première source d'alimentation (130, 230) et d'une tension directe du pont redresseur (280).

6. Unité de branchement selon l'une quelconque des revendications précédentes, dans laquelle l'unité de branchement (100) comprend une unité de mesure (276) configurée pour mesurer un courant dans un câble de dérivation connecté à l'unité de branchement, ladite mesure permettant d'évaluer la présence d'un courant suffisant dans le câble de dérivation pour déclencher le fonctionnement de l'unité de commande (274).
